# FASCICULE DE BREVET EUROPEEN

(11) **EP 3 152 013 B1**
(45) Date de publication et mention de la délivrance du brevet: **25.07.2018**
(21) Numéro de dépôt: 15727953.0
(22) Date de dépôt: 03.06.2015
(51) Int. Cl.: B25J 19/00, B25J 19/06

(54) **SYSTÈME ANTI COINCEMENT DANS UN ROBOT À CARACTÈRE HUMANOÏDE**
KLEMMSCHUTZSYSTEM BEI EINEM HUMANOIDEN ROBOTER
ANTI-JAMMING SYSTEM IN A HUMANOID-TYPE ROBOT

(30) Priorité: 03.06.2014 FR 1455028
(43) Date de publication de la demande: 12.04.2017
(73) Titulaire: Softbank Robotics Europe, 75015 Paris (FR)
(72) Inventeur: MUGNIER, Fabien, F-75015 Paris (FR); CLERC, Vincent, F-92140 Clamart (FR)
(74) Mandataire: Collet, Alain
(86) Numéro de dépôt international: PCT/EP2015/062459
(87) Numéro de publication internationale: WO 2015/185671

(56) Documents cités:
- JP-A- 2000 158 378
- JP-A- 2004 174 644
- US-A1- 2004 236 469
- US-A1- 2011 067 521

## Description

L'invention concerne la sécurité d'utilisation d'un robot à caractère humanoïde.

Un robot peut être qualifié d'humanoïde à partir du moment où il possède certains attributs de l'apparence et des fonctionnalités de l'homme comme par exemple une tête, un tronc, deux bras, deux mains, deux jambes ou deux pieds. Certains robots ne possédant que le haut du corps peuvent également être considérés comme possédant des caractères humanoïdes. Des robots humanoïdes sont capables de marcher ou de se déplacer sur une plateforme munie de roues, de faire des gestes, avec les membres ou avec la tête. La complexité des gestes qu'ils sont capables d'effectuer augmente sans cesse.

Ces robots sont destinés à interagir avec des humains et il est nécessaire d'éviter que les gestes des robots ne puissent blesser les humains qui les entourent. Plus précisément, lors du mouvement de certaines articulations du robot, celui-ci pourrait pincer des doigts humains se trouvant à proximité. Par exemple lorsque le bras d'un robot se rapproche de son tronc, il y a risque de coincement entre le bras et le tronc. De façon plus générale, le risque de coincement existe entre deux éléments du robot, articulés entre eux.

Plusieurs solutions ont été imaginées pour réduire le risque de coincement ou pour en limiter les conséquences. Pour éviter tout coincement, on peut limiter le débattement d'une articulation au moyen de butée permettant de conserver un écart suffisant entre les éléments reliés par l'articulation considérée. Cette solution limite les possibilités du robot en lui interdisant certains mouvements. L'anthropomorphisme du robot est alors dégradé.

Pour limiter les conséquences d'un coincement, on peut réduire l'effort produit par l'actionneur mouvant l'articulation considérée. Cette réduction d'effort limite aussi les possibilités du robot qui, par exemple, ne pourra plus soulever des charges importantes. Il est possible de limiter l'effort d'un actionneur uniquement en fin de course, lorsque les deux éléments se rapprochent. Cette limitation nécessite un pilotage complexe de l'actionneur. Ce pilotage est couteux à mettre en oeuvre et peut être source d'une réduction de fiabilité du robot.

Le document JP-A-2000/158378 décrit un robot humanoïde comprenant un système anti pincement formant une amorce de solution à la sécurité de fonctionnement du robot.

L'invention vise à améliorer encore la sécurité de fonctionnement d'un robot au moyen d'une solution complètement passive permettant de limiter l'effort de pincement en fin de course d'un débattement d'une articulation.

A cet effet, l'invention a pour objet un robot à caractère humanoïde comprenant deux éléments et une articulation à au moins un degré de liberté reliant les deux éléments, les deux éléments comprenant chacun une peau délimitant leur surface externe, l'articulation permettant un débattement dans une plage donnée, un premier des deux éléments étant destiné à venir sensiblement au contact d'une zone de la peau d'un second des deux éléments à une extrémité de la plage. La zone est souple de façon à permettre sa déformation d'une distance donnée avec un effort inférieur à un effort donné et le premier élément est accroché au second élément en traversant la zone souple.

La zone souple peut être configurée pour rester en contact soit avec l'articulation, soit avec le premier élément.

Le robot peut comprendre une butée appartenant à l'un des deux éléments. A l'extrémité de la plage, l'autre des deux éléments vient au contact de la butée.

Les peaux des deux éléments sont en majeure partie rigide et avantageusement, au moins une zone souple est disposée dans la continuité d'une zone rigide de la peau.

La zone souple est discontinue à l'intérieur d'une ligne fermée. Le premier élément traverse la peau par la discontinuité de la zone souple et une zone rigide de la peau entoure la zone souple tout au long de la ligne fermée.

L'invention sera mieux comprise et d'autres avantages apparaîtront à la lecture de la description détaillée d'un mode de réalisation donné à titre d'exemple, description illustrée par le dessin joint dans lequel :
les figures 1a et 1b représentent deux exemples de robots mettant en oeuvre l'invention ;
les figures 2a et 2b représentent une épaule du robot de la figure 1b;
la figure 3 représente un bras du robot de la figure 1b ;
la figure 4 représente une hanche du robot de la figure 1b.

Par souci de clarté, les mêmes éléments porteront les mêmes repères dans les différentes figures.

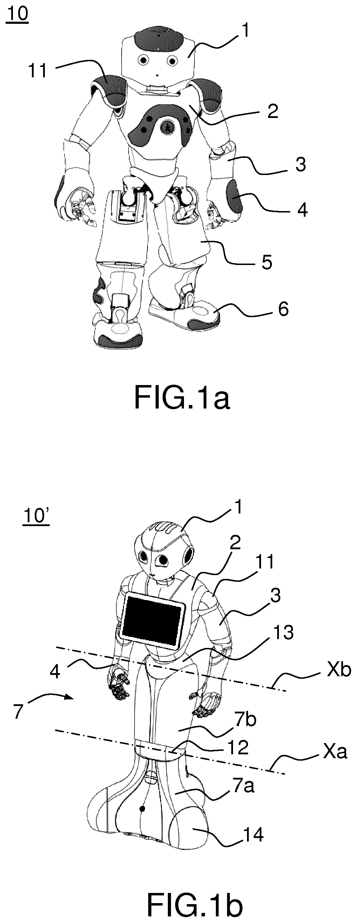

Les figures 1a et 1b représentent deux exemples de robots à caractères humanoïdes développés par la société ALDEBARAN ROBOTICS™. Le robot humanoïde 10 représenté en figure 1a comprend une tête 1, un tronc 2, deux bras 3, deux mains 4, deux jambes 5 et deux pieds 6. Le robot humanoïde 10' représenté en figure 1b comprend une tête 1, un tronc 2, deux bras 3, deux mains 4 et une jupe 7. Ces deux robots comprennent plusieurs articulations autorisant le mouvement relatif des différents membres du robot dans le but de reproduire la morphologie humaine et ses mouvements. Les robots 10 et 10' comprennent par exemple une articulation 11 entre le tronc 2 et chacun des bras 3. L'articulation 11 formant une épaule du robot est motorisée autour de deux axes de rotation pour permettre de déplacer le bras 3 par rapport au tronc 2 à la manière des déplacements possibles par une épaule d'un être humain.

Le robot à caractères humanoïdes 10 comprend également plusieurs articulations pour mettre en mouvement les jambes du robot et reproduire le mouvement de la marche, en particulier des articulations assimilables à une hanche, entre le tronc et chacune des cuisses, à un genou, entre une cuisse et la jambe, et à une cheville entre la jambe et le pied. Plusieurs formes d'articulations motorisées sont mises en oeuvre, entrainant en mouvement l'un des membres selon un ou plusieurs degrés de liberté en rotation.

Le robot à caractères humanoïdes 10' présente une architecture différente. Pour améliorer la stabilité et abaisser le centre de gravité du robot, le robot ne comprend pas de jambe mais une jupe 7 comprenant en sa base un tripode 14 capable de déplacer le robot. La jupe 7 comprend aussi une première articulation 12 s'apparentant à un genou, entre une jambe 7a et une cuisse 7b. Une deuxième articulation 13 s'apparentant à une hanche est relie le tronc 2 et la cuisse 7b. Ces deux articulations 12 et 13 sont des liaisons pivots motorisées autour d'un axe de rotation. L'axe de rotation Xa de l'articulation 12 et l'axe de rotation Xb de l'articulation 13 sont sensiblement parallèles à un axe reliant les deux épaules du robot, permettant d'incliner le robot vers l'avant ou vers l'arrière.

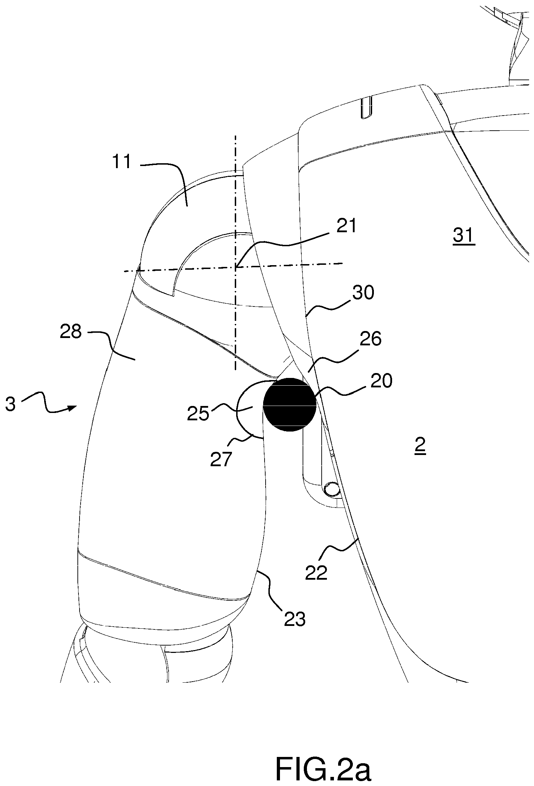

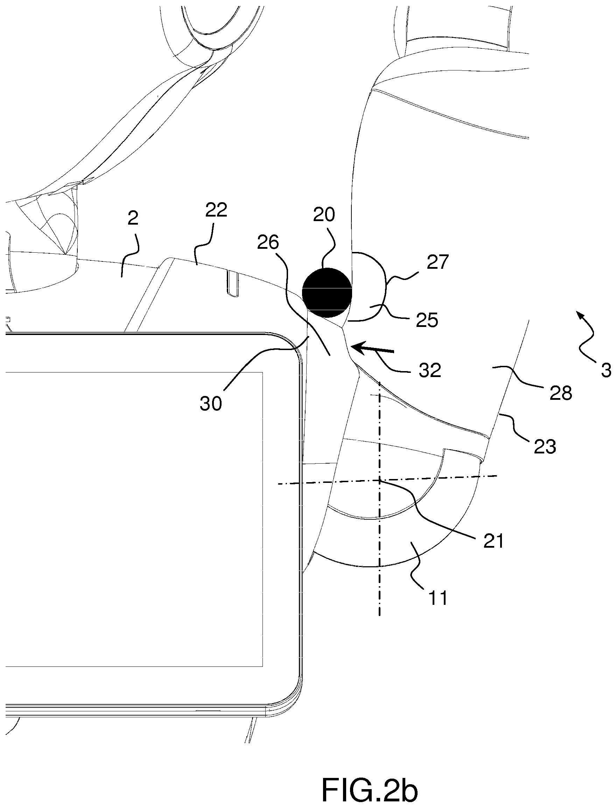

Les figures 2a et 2b représentent plus en détail l'épaule 11 du robot 10'. Sur des ceux figures, on a représenté un objet 20 à section circulaire représentant un doigt humain susceptible d'être pincé entre le tronc 2 et le bras 3. L'objet 20 est représenté en coupe sur les deux figures. Dans la pratique, l'objet 20 peut être un calibre normalisé représentant un doigt humain. Ce calibre ne doit par être pincé trop fortement entre deux éléments du robot. Plus précisément, le robot ne doit pas exercer sur le calibre un effort supérieur à un effort donné.

Sur la figure 2a, l'objet 20 est disposé sous le bras 3 au niveau de l'aisselle du robot 10'. Le bras 3 tend à se rabattre le long du tronc 2 en pinçant l'objet 20 sous l'aisselle entre le bras 3 et le tronc 2. Dans l'exemple représenté sur la figure 2a, on s'intéresse à la rotation de l'articulation 11 autour d'un axe horizontal 21 perpendiculaire au plan frontal du robot 10'. Le plan frontal est parallèle au plan de la figure 2a et l'axe horizontal 21 est perpendiculaire au plan de la figure. L'articulation 11 permet un débattement angulaire dans une plage donnée autour de l'axe 21. Le bras 3 peut avoir un débattement de l'ordre de 180°. L'invention permet de limiter les effets du pincement de l'objet 20 lorsque le bras 3 arrive en fin de course à une extrémité de la plage, ici, lorsque le bras 3 est le long du tronc 2. Il est bien entendu que l'invention s'applique aussi pour l'autre extrémité de la plage de rotation autour de l'axe 21, comme on le verra à l'aide de la figure 2b, pour la rotation autour de l'autre axe de rotation de l'articulation 11 autour d'un axe vertical et de façon générale pour tout mouvement combiné des deux rotations de l'articulation 11.

La surface externe du tronc 2 et du bras 3 forme une peau, respectivement 22 et 23. En bout de course, lorsque le bras 3 s'étend le long du tronc 2, la peau 23 du bras 3 et la peau 22 du tronc 2 viennent sensiblement au contact l'une de l'autre. Plus précisément, il existe pour chaque peau, une zone où l'écart entre les deux peaux est inférieur à la section de l'objet 20. Cette zone porte le repère 25 pour la peau 23 du bras 3 et le repère 26 pour la peau 22 du tronc 2. Selon l'invention, une des zones 25, 26 ou les deux zones 25, 26, destinées à venir au contact, sont souples de façon à permettre leur déformation d'une distance donnée avec un effort inférieur à un effort donné. La distance donnée est la section de l'objet 20. La distance donnée est par exemple de l'ordre de 5mm, représentant le diamètre du doigt d'un enfant. L'effort donné représente l'effort maximal que l'on peut autoriser lors du pincement de l'objet 20.

La déformation de la zone ou des zones 25, 26, de la peau considérée se fait dans leur domaine élastique respectif de façon à reprendre leur forme initiale lorsque le bras 3 quitte sa position fin de course par rapport au tronc 2. En l'absence de l'objet 20, on peut avoir un léger écart entre les zones 25 et 26 des peaux 22 et 23, un contact sans effort ou même une légère pression entre les zones 25 et 26.

La présence de ces zones souples 25 et 26 permet au robot de se rapprocher de la morphologie humaine. Les zones souples 25 et 26 de la peau peuvent être formées à partir de membranes réalisées dans un matériau élastomère comme par exemple à base de silicone ou de caoutchouc.

La fin de course de l'articulation 11 peut être réalisée par un pilotage d'un actionneur permettant le mouvement de l'articulation 11 ou par une butée mécanique disposée à l'intérieur de l'articulation 11.

Dans l'exemple représenté, la zone souple 25 est continue à l'intérieur d'une ligne fermée 27 qui la limite. Une zone rigide 28 de la peau 23 entoure la zone souple 25 tout au long de la ligne fermée 27. Pour le bras, 3, la peau 23 est principalement rigide. Une ou plusieurs zones souples 25 sont disposées sur la peau 23. Ces zones 23 sont localisées à des endroits où le bras 3 est susceptible de venir sensiblement au contact d'un autre élément du robot 10', le tronc 2 en l'occurrence.

La zone souple 26 du tronc 2 est discontinue à l'intérieur d'une ligne fermée 30 qui la limite. Le bras 3 traverse la peau 22 du tronc par la discontinuité de la zone souple 26. Une zone rigide 31 de la peau 22 entoure la zone souple 26 tout au long de la ligne fermée 30. Autrement dit, la peau 22 du tronc 2 est, comme pour le bras 3, principalement rigide. La zone souple 26 est fixée à la zone rigide 31 le long de la ligne fermée 30. La zone souple 26 forme une jupe fixée à la zone rigide 22 et entourant l'accrochage du bras 3 sur le tronc 2. En entourant complètement le bras 3, la zone souple 26 permet au bras 3 de se rapprocher du tronc 2 dans toutes les combinaisons de rotation de l'articulation 11. De plus, grâce à sa forme de jupe, la zone souple 26 permet de limiter la pénétration d'objets indésirables à l'intérieur de l'articulation 11. A cet effet, la zone souple 26 est configurée pour rester en contact avec l'accrochage du bras 3 sur le tronc 2. La zone souple 26 peut rester en contact soit avec l'articulation 11, soit avec le bras 3. La zone souple 26 permet notamment de protéger l'articulation 11 des poussières ambiantes. La zone souple 26 permet également de confiner d'éventuels défauts pouvant intervenir à l'intérieur du robot. Il peut par exemple s'agir de départ de feu liés à un défaut électrique et de conserver à l'intérieur du robot d'éventuelles pièces mécaniques cassées.

La figure 2b représente le bras 3 s'étendant sensiblement verticalement vers le haut. Le bras 3 est en fin de course de sa rotation autour de l'axe 21 à l'extrémité de sa plage de rotation, extrémité opposée à celle représentée sur la figure 2a. La zone rigide 28 de la peau 23 du bras 3 s'enfonce légèrement dans la zone souple 26 de la peau 22 du tronc 2. Cet enfoncement est visible au niveau de la flèche 32. Sur cette figure, on a représenté l'objet 20 pincé entre l'épaule et le bras 3. Pour limiter les conséquences du pincement de l'objet 20, le bras 3 peut comprendre une seconde zone souple 25. Au niveau du tronc 2, l'objet 20 s'enfonce dans la zone souple 26 du tronc 2.

De façon plus générale, le tronc 2 et/ou le bras 3 possèdent autant de zones souples que nécessaire situées aux endroits ou les peaux de ces deux éléments (tronc 2 et bras 3) peuvent se rapprocher ou même entrer en collision lors des différents mouvements du bras 3 par rapport au tronc 2. La peau du bras 3 et du tronc 2 est en majeure partie rigide. La ou les zones souples 25, 26 qui y sont réalisées sont disposées dans la continuité des zones rigides, respectivement 28 et 31.

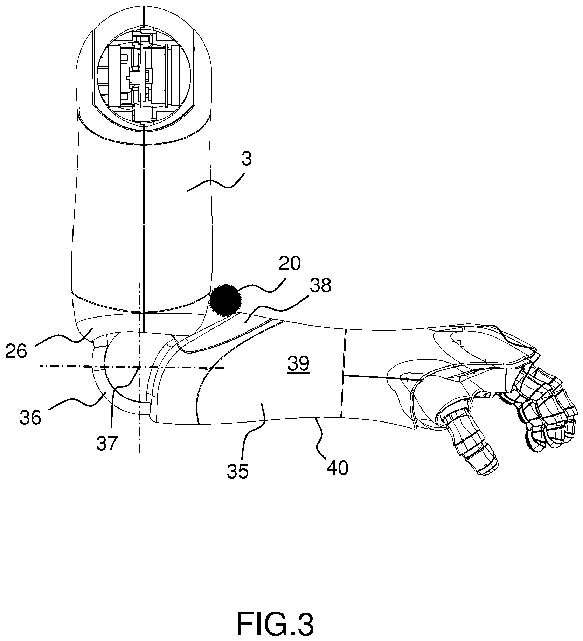

La figure 3 représente le bras 3 relié à un avant bras 35 du robot 10'. Un coude 36 assurant la mobilité en rotation autour d'un axe 37 perpendiculaire au plan de la figure 3, relie le bras 3 et l'avant bras 35. On retrouve sur le bras 3 une zone souple 26 en forme de jupe au travers de laquelle s'étend le coude 36. Sur l'avant bras 35 une zone souple 38 poursuit une zone rigide 39 de la peau 40 de l'avant bras 35. La zone souple 38 peut entourer complètement l'avant bras 35 et suivre une ligne fermée de celui-ci. Alternativement, la zone souple 38 peut ne suivre qu'en partie la ligne fermée limitant la zone rigide 39. La zone souple 38 est alors en forme de lèvre disposée au niveau où l'avant bras 35 se rapproche le plus du bras 3 lors de la rotation du coude 36 dans un premier sens de rotation. Dans une rotation en sens opposée au premier sens, l'avant bras 35 vient sensiblement dans l'alignement du bras 3. Sur l'arrière du coude 36, on peut se passer de zone souple sur l'avant bras 35. La zone souple 26 du bras 3 peut suffire pour éviter tout dommage du au pincement. Il est avantageux de prévoir que la zone souple entoure complètement le coude 36, même si le coude 36 ne possède qu'un seul degré de liberté en rotation. Une partie de la zone souple 26 n'a pas de fonction anti coincement mais conserve ses fonctions de protection contre les corps étrangers et de confinement de défauts à l'intérieur du robot.

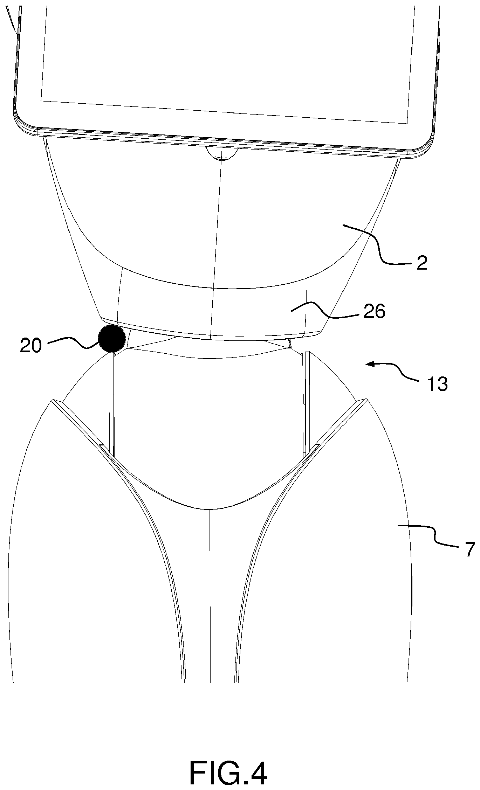

La figure 4 représente plus en détail la hanche 13 du robot 10'. La hanche 13 peut posséder un ou deux degrés de liberté entre le tronc 2 et la jupe 7. On peut retrouver une configuration voisine avec une hanche dans le robot 10 possédant deux jambes 5. La plage de débattement angulaire de la hanche 13 est par exemple inférieure à 90°. Pour un tel débattement angulaire, une zone souple sur la peau de l'un des éléments du robot relié par la hanche peut suffire. Dans l'exemple représenté, une zone 26 forme la partie basse du tronc 2. Comme pour l'épaule 11 ou le coude 36, la zone 26 fait ici le tour du tronc 2 autour de son axe vertical.

## Revendications

1. Robot à caractère humanoïde comprenant deux éléments (2, 3) et une articulation (11) à au moins un degré de liberté reliant les deux éléments, les deux éléments comprenant chacun une peau (22, 23) délimitant leur surface externe, l'articulation (11) permettant un débattement dans une plage donnée, un premier des deux éléments (2, 3) étant destiné à venir sensiblement au contact d'une zone (26) de la peau (22, 23) d'un second des deux éléments à une extrémité de la plage, la zone (26) étant souple de façon à permettre sa déformation d'une distance donnée avec un effort inférieur à un effort donné, **caractérisé en ce que** le premier élément (3) est accroché au second élément (2) en traversant la zone souple (26).

2. Robot selon la revendication 1, caractérisé en ce la zone souple (26) est configurée pour rester en contact soit avec l'articulation (11), soit avec le premier élément (3).

3. Robot selon l'une des revendications précédentes, **caractérisé en ce qu'**il comprend une butée appartenant à l'un des deux éléments (2, 3), et **en ce qu'**à l'extrémité de la plage, l'autre des deux éléments (2, 3) vient au contact de la butée.

4. Robot selon l'une des revendications précédentes, **caractérisé en ce que** les peaux (22, 23) des deux éléments (2, 3) sont en majeure partie rigide et **en ce qu'**au moins une zone souple (26) est disposée dans la continuité d'une zone rigide (28, 31) de la peau (22, 23).

## Patentansprüche

1. Roboter mit humanoidem Charakter, umfassend zwei Elemente (2, 3) und ein die beiden Elemente verbindendes Gelenk (11) mit wenigstens einem Freiheitsgrad, wobei die beiden Elemente jeweils eine Haut (22, 23) umfassen, die ihre Außenfläche begrenzt, wobei das Gelenk (11) einen Spielraum in einem gegebenen Bereich zulässt, wobei ein erstes der beiden Elemente (2, 3) so ausgelegt ist, dass es im Wesentlichen mit einer Zone (26) der Haut (22, 23) eines zweiten der beiden Elemente an einem Ende des Bereichs in Kontakt kommt, wobei die Zone (26) elastisch ist, um ihre Verformung um eine gegebene Distanz mit einer Kraft zuzulassen, die geringer ist als eine gegebene Kraft, **dadurch gekennzeichnet, dass** das erste Element (3) an dem zweiten Element (2) beim Durchqueren der elastischen Zone (26) angebracht ist.

2. Roboter nach Anspruch 1, **dadurch gekennzeichnet, dass** die elastische Zone (26) so konfiguriert ist, dass sie entweder mit dem Gelenk (11) oder mit dem ersten Element (3) in Kontakt bleibt.

3. Roboter nach einem der vorherigen Ansprüche, **dadurch gekennzeichnet, dass** er ein Widerlager umfasst, das zu einem der beiden Elemente (2, 3) gehört, und dadurch, dass am Ende des Bereichs das andere der beiden Elemente (2, 3) mit dem Widerlager in Kontakt kommt.

4. Roboter nach einem der vorherigen Ansprüche, **dadurch gekennzeichnet, dass** die Häute (22, 23) der beiden Elemente (2, 3) größtenteils starr sind, und dadurch, dass wenigstens eine elastische Zone (26) in der Kontinuität einer starren Zone (28, 31) der Haut (22, 23) angeordnet ist.

## Claims

1. A humanoid-type robot comprising two elements (2, 3) and an articulation (11) with at least one degree of freedom linking the two elements, the two elements each comprising a skin (22, 23) delimiting their outer surface, the articulation (11) allowing a travel within a given range, a first of the two elements (2, 3) being intended to come substantially into contact with a zone (26) of the skin (22, 23) of a second of the two elements at an end of the range, the zone (26) being flexible so as to allow the deformation thereof by a given distance with a force less than a given force, **characterized in that** the first element (3) is attached to the second element (2) by passing through the flexible zone (26).

2. The robot as claimed in claim 1, **characterized in that** the flexible zone (26) is configured to remain in contact either with the articulation (11), or with the first element (3).

3. The robot as claimed in one of the preceding claims, **characterized in that** it comprises an abutment belonging to one of the two elements (2, 3), and **in that** at the end of the range, the other of the two elements (2, 3) comes into contact with the abutment.

4. The robot as claimed in one of the preceding claims, **characterized in that** the skins (22, 23) of the two elements (2, 3) are mostly rigid and **in that** at least one flexible zone (26) is arranged in the continuity of a rigid zone (28, 31) of the skin (22, 23).
